(19) Europäisches Patentamt
European Patent Office
Office européen des brevets

(11) Publication number: 0 158 394
A1

(12) EUROPEAN PATENT APPLICATION

(21) Application number: 85200439.9

(22) Date of filing: 21.03.85

(51) Int. Cl.⁴: C 08 L 75/00
C 08 L 77/02, C 08 L 79/04
C 08 G 69/16, C 08 G 18/00
//(C08L75/00,77:02),
(C08L77/02,75:00), (C08L79/04,
77:02)

(30) Priority: 22.03.84 US 592081

(43) Date of publication of application:
16.10.85 Bulletin 85/42

(84) Designated Contracting States:
BE CH DE FR GB IT LI NL

(71) Applicant: STAMICARBON B.V.
LICENSING SUBSIDIARY OF DSM Postbus 53
NL-6160 AB Geleen(NL)

(72) Inventor: Frisch, Kurt Charles
17986 Park Lane
Gross Ile Michigan 48138(US)

(72) Inventor: Ashida, Kaneyoshi
23560 East Newell Circle
Farmington Fills Michigan 48024(US)

(72) Inventor: Van der Loos, Jozef Lambertus Maria
Rijksweg Zuid 146
NL-6134 AE Sittard(NL)

(72) Inventor: Van Geenen, Albert Arnold
Merkelbeekerstraat 82
NL-6441 KM Brunssum(NL)

(74) Representative: van Leeuwen, Hendrik Bernardus et al,
Octrooibureau DSM Postbus 9
NL-6160 MA Geleen(NL)

(54) **Process for preparing a polymer alloy, molded product, and reaction injection molded product.**

(57) The invention relates to a process for preparing a polymer alloy based upon at least one polyamide polymer, and at least one polymer of the group of polyurethane polymer, polyurea polymer and polyisocyanurate polymer. The invention further relates to a molded object comprising a polyamide polvmer, and at least one polymer of the group of polyurethane polymer, polyurea polymer and polyisocyanurate polymer. The invention further comprises a reaction injection molded product composed of an alloy consisting of 1. at least one polymer of the group of a polyurethane polymer, polyurea polymer and polyisocyanurate polymer and 2. a polyamide polymer.

EP 0 158 394 A1

# PROCESS FOR PREPARING A POLYMER ALLOY, MOLDED PRODUCT, AND REACTION INJECTION MOLDED PRODUCT

The invention relates to a process for preparing a polymer alloy based upon at least one polyamide polymer, and at least one polymer of the group of polyurethane polymer, polyurea polymer and polyisocyanurate polymer. The invention further relates to a molded object comprising a polyamide polymer, and at least one polymer of the group of polyurethane polymer, polyurea polymer and polyisocyanurate polymer. The invention further comprises a reaction injection molded product composed of an alloy consisting of 1. at least one polymer of the group of a polyurethane polymer, polyurea polymer and polyisocyanurate polymer and 2. a polyamide polymer.

## BACKGROUND OF THE INVENTION

Reaction injection molding (RIM) is a one-shot injection method of liquid components usually by impingement into a mold where rapid polymerization occurs resulting in a molded plastic product.

The pressures employed are much lower than in conventional injection molding processes.

In a RIM process, viscosity of the materials fed to a mold is about 50 to 10,000 cps, preferably about 1500 cps, at injection temperatures varying from room temperature for urethanes to about 150°C for lactams. Mold temperatures in a RIM process typically range from about 100° to about 220°C. The mold pressures generally range from about 1 to 100 bar, more particularly 1-30 bar. At least one component in the RIM formulation consists of monomers and adducts thereof that are polymerized to a polymer in the mold.

RIM differs from injection molding in a number of important respects. The main distinction between injection molding and RIM resides in the fact that in RIM, a chemical reaction takes place in the mold to transform a monomer or adducts to a polymeric state. Injection

molding is conducted at pressures of about 700 to 1400 bar in the mold cavity by melting a solid resin and conveying it into a mold maintained at room temperature while the temperature of the molten resin is maintained at about 150° to 350°C. At injection temperatures of about 150° to 350°C., viscosity of the molten resin in an injection molding process is generally in the range of 50,000 cps to 1,000,000 cps and typically about 200,000 cps. In injection molding processes, solidification of the resins occurs in about 10 to 90 seconds, depending on the size of the molded product, following which, the molded product is removed from the mold. There is no chemical reaction taking place in an injection molding process when the resin is introduced into a mold.

For practical purposes, in a RIM-process the chemical reaction must take place rapidly in less than about 2 minutes for smaller items. Presently, urethanes are commercially available for RIM processing although systems based on nylon and epoxy are said to be in development (Polymer Engineering and Science, dec. 1982, Vol. 22, No. 17, pp. 1143-1152).

Anionic polymerization of a lactam to give nylon has been known for many years.

In connection with nylons in general, the following developments of the anionic polymerization of nylon are broadly germaine.

In U.S. patent No. 3,018,273 a process for the in situ polymerization of caprolactam is described, wherein an organomagnesium compound is used as an initiator, and an N,N diacyl compound is used as promoter (or activator).

British patent No. 1,067,153 describes a process for preparing nylon-block-copolymers by anionically polymerizing caprolactam in the presence of various activators suitable for preparing nylon 6 polymers. Preparation of nylon block copolymers using an isocyanate terminated polypropylene glycol and a potassium based catalyst is described. A nylon block copolymer containing at least one polyether block is thereby formed.

In U.S. patent Nos. 3,862,262, 4,031,164, 4,034,015 and 4,223,112 various aspects of the preparation of nylon blockcopolymers from caprolactam in the presence of an acyllactam activator are described.

U.S. patent Nos., 4,031,164 and 4,223,112 describe the lactam-polyol-polyacyl-lactam-block terpolymers having a specified ratio of the various components. More particularly, the former patent discloses the use of 18 to 90 % by weight of polyol blocks in the terpolymer.

U.S. patent No. 3,862,262 describes lactam-polyol-acyl-polylactam block-terpolymers.

U.S. patent No. 4,034,015 is directed to lactam-polyol-polyacyl-lactam or lactam-polyol-acyl-polylactam block terpolymers having at least about 5 % ester end group termination.

U.S. Reissue patent 30,371 describes preparing polyester-polyamide compounds by condensation of an alcohol and acyllactams in the presence of at least one of a Group IA, IIA, IIB, and IIIA metal or metal compound.

U.S. patent 3,925,325 describes a catalyzed process for the preparation of monomeric and/or polymeric compounds such as esters, polyesters, ester amides, and polyester-polyamides which result from the reaction of an imide and an alcohol in the presence of an organoaluminium, imide-alcohol condensation catalyst.

U.S. patent 3,965,075 describes using an amide or a Group IVA, IB, IVB, VB, VIB, or VIII organometal compound for this condensation.

In European Patent application No. 67693, laid open to public inspection on December 22, 1982, acid halide materials and acyllactam functional materials are described as useful in the preparation of nylon block copolymers selected from the group consisting of those having the formula

$$Z[O-\overset{O}{\overset{\|}{C}}-R(\overset{O}{\overset{\|}{C}}-A)_a]_b$$ and

$$Z[O-\overset{O}{\overset{\|}{C}}-\overset{O}{\overset{\|}{C}}-A]_b,$$ wherein

- A is X or Q,
- X is halogen,
- Q is 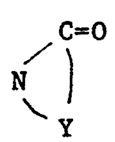 with
- Y = $C_3-C_{11}$

alkylene;

a is an integer equal to 1, 2 or 3;

b is an integer equal to or greater than 2;

R is a di- or polyvalent group selected from hydrocarbon groups and hydrocarbon groups containing ether linkages; and

Z is a segment of:

(1) a polyether having a minimum molecular weight of 2,000, or

(2) a polyester containing polyether segments having minimum molecular weights of about 2000, or

(3) a segment of a hydrocarbon or

(4) a polysiloxane.

European patent application No. 67,695, laid open to public inspection on December 22, 1982, describes a process for preparing a nylon block copolymer by reactively contacting lactam monomer, basic lactam polymerization catalyst and the acyllactam functional material described in European patent application No. 67,693.

European patent application No. 67,694, laid open to public inspection on December 22, 1982, is directed to acid halide and acyllactam functional materials and to a process for the preparation of nylon block copolymers therewith. The acid halide or acyllactam functional materials are selected from a group defined by a complex formula.

Sibal et al, 'Designing Nylon 6 Polymerization Systems for RIM', apparently presented in part at the 2nd International Conference on Reactive Polymer Processing, Pittsburgh Pa., in November 1982, described preparing various initiators for anionically polymerizing lactams including a polymeric initiator. This initiator is prepared by reacting hexamethylene diisocyanate (HDI) with a polypropylene oxide diol, having an average molecular weight of 2000, by slow addition of the diol (1 mole) to two moles of HDI. The resulting product was reacted with anhydrous lactam at 80 °C. No mechanical properties data are reported on the final product. Indeed, further work is said to be required to even begin exploring the processability and properties of the products. This paper also reports that reaction ratios and other process governing parameters are not known and further work is

required.

U.S. patent No. 4,400,490 describes the anionic polymerization of a lactam with an epoxy-compound in the presence of a basic catalyst and a promoter. The epoxy compound can be the reaction product of a polymeric polyol and an epoxy compound.

U.S. patent No. 3,793,399 describes the use of a polyol, soluble in molten caprolactam, for improving the impact resistance of polycaprolactam. An organic nitrogen compound is used as a promoter in the polymerization.

The use of etherified polyols in the anionic polymerization of caprolactam is described in U.S. patent No. 3,770,689,

It has been suggested in the copending US patent applications Nos. 641771 and 641772 of Van Geenen et al, to prepare an activator for the polymerization of lactam by reacting a polyol (such as a polymeric diol, triol or tetrol) and a lactam terminated polyisocyanate in the presence of a lactam polymerization catalyst or a Lewis acid.

Presently, nylon 6 block copolymers may be candidates for structural exteriorly exposed panels. However, drawbacks weighing against the adaptability of nylon to the RIM process include the high moisture absorption rate of the product which could adversely affect dimensional stability between demolding, coating and/or application operations. Thus, mechanical properties such as impact strength — especially for the glass fiber filled products--, water absorption, and flexural modulus must be improved. Otherwise, there will be obstacles to production on a commercial scale.

A disadvantage of the RIM process for the preparation of nylon block copolymers resides therein that it is not possible to choose the molecular weight (or degree of polymerization) of the nylon blocks independently from the amount of rubber phase used and the molecular weight thereof.

In the anionic polymerization of a lactam, using a polymeric activator, only two degrees of freedom exist, viz. when the molecular weight of the initiator and the amount thereof, which usually determines the amount of rubber, have been fixed, the degree of polymerization is also fixed and vice versa.

It would be very advantageous if the amount of rubber phase incorporated in the system could be independent of the molecular weight of the nylon block in the nylon block copolymer.

The improvement of the properties mentioned herein above, and other objects are achieved by the present invention.

## DESCRIPTION OF THE INVENTION

The present invention provides a process for preparing a polymer alloy, preferably by reaction injection molding, comprising: introducing a mixture of substantially stable reactant streams into a mold, said mixture in the aggregate containing

1) polymer forming compounds forming at least one polymer of the group of polyurethane polymer, polyurea polymer and polyisocyanurate polymer and
2) polyamide polymer forming compounds,

said polyurethane polymer forming compounds including a polyol, a polyisocyanate, and a urethane polymerization catalyst,
said polyurea polymer forming compounds including a polyamine or hydrazine containing compound, a polyisocyanate and optionally a urea polymerization catalyst,
said polyisocyanurate polymer forming compounds comprising an isocyanate groups containing prepolymer or a polyol and a polyisocyanate, and a trimerization catalyst,
said polyamide polymer forming compounds including lactam, an anionic polymerization catalyst and a polymerization activator,
said polyurethane polymer forming compounds, said polyisocyanurate polymer forming compounds, said polyurea polymer forming compounds, and said polyamide polymer forming compounds reacting to form polyurethane, polyurea, polyisocyanurate and polyamide polymers respectively in said mold thereby yielding a polymer alloy composed of said polymers, and recovering said polymer alloy from said mold.

The present invention furter provides molded objects obtained by reacting in a mold in the presence of each other the compounds mentioned hereinabove.

Still further the present invention provides for a reaction injection molded product composed of an alloy consisting of

1. at least one of polyurethane polymer, polyurea polymer, and polyisocyanurate polymer and
2. a polyamide polymer.

The stable reactant streams mentioned hereinabove, separately contain, prior to admixture, part of the compounds to be introduced into the mold. All streams together contain all of the reactants required to produce the products. In the present process both a polyamide polymer and a polyurethane polymer, a polyamide polymer and a polyisocyanurate polymer, a polyamide polymer and a polyurea polymer, both a polyamide polymer, a polyurethane polymer and a polyisocyanurate polymer or both a polyamide polymer, a polyurea polymer and a polyisocyanurate polymer are formed. Due to the approximately simultaneous reaction, these polymers are intermingled at molecular level thereby resulting in a polymer alloy. It is believed, based upon present understanding of the invention that the polyamide polymer and the polyurethane polymer, the polyurea polymer or the polyisocyanurate polymer are formed independently of each other by different mechanisms, whereby the formation of covalent bonds between the polyamide polymer system on the one hand, and the polyurethane polymer, the polyurea polymer and/or the polyisocyanurate polymer systems is substantially prevented. However it is quite possible that the polyisocyanurate polymer contains urethane or urea bonds or groups, or alternatively the polyurethane polymer or polyurea polymer contains trimerized polyisocyanurate groups etc. Furthermore occasional grafts between the polyamide polymer and one or more of the other polymers may occur.

If specific process reaction conditions are employed, then an interpenetrating polymer network can be formed.

Interpenetrating polymer networks (IPN's) exhibit varying degrees of phase separation, dependent principally on the compatibility of the polymers. With highly incompatible polymers, the thermodynamic forces leading to phase separation are so powerful that separation occurs substantially despite countervailing kinetic factors. In these cases only small gains in phase mixing occur. In cases

where the polymers are more compatible, phase separation can be almost completely circumvented. However, complete compatibility is not necessary to achieve complete phase mixing, since the permanent entanglements (catenation) can effectively prevent phase separation. With intermediate situations of compatibility, intermediate and complex phase behavior results. Thus, IPN's with dispersed phase domains ranging from a few micrometers incompatible to a few tens nanometers (intermediate), finally to those with no resolvable domain structure (complete mixing) have been reported.

IPN's represent a special example of topological isomerism in macromolecules, i.e. different ways of imbedding these molecules in three-dimensional space. Some permanent entanglements between the different crosslinked networks are inevitable in any sufficiently intimate mixture of the crosslinked networks. These represent examples of catenation in polymer systems.

Combining varied chemical types of polymeric networks in different compositions, frequently resulting in controlled but different morphologies, can produce IPN's with synergistic behaviour. For example, if one polymer is glassy and the other is elastomeric at room temperature, then either a reinforced rubber or a high impact plastic depending on which phase is continous can be obtained. Known interpenetrating polymeric networks are described in U.S. Patent 4,302,553 and in Frisch et al, Recent Advances in Interpenetrating Polymer Networks, Poly. Eng. Sci., Vol. 22, pp. 1143-1152 (Dec. 1982).

In producing such networks, little or no phase separation occurs during the reaction in the mold. This can be accomplished by a suitable choice of the various compounds such as, for example, choosing both polyamide and polyurethane, polyurea, or polyisocyanurate polymer forming compounds which are compatible with each other. In that case it can also be important that the polyamide and the other polymer or polymers used are compatible with each other. Another approach entails controlling the compounds such that the reaction rates of the polymerization reactions are so fast that little or no phase separation occurs.

Depending on the compounds used, guidelines will be discussed

in greater detail hereinbelow, various kinds of polymer alloys may be obtained. For instance, when both the polyamide polymer and the other polymer(s) are cross-linked the resulting product will comprise two intermingled (interpenetrated) cross-linked polymeric structures (full IPN). Whereas, if only one of the polyamide polymer or the other polymer(s) is cross-linked while the other is linear or branched then the product will comprise one network in which the other non-crosslinked polymer is distributed on a molecular scale (pseudo IPN or semi IPN). Still further, if all polymers are both linear or branched, substantially without cross-linking, a polymeric blend is obtained (polyblend): the blend is a polymer mixture on a molecular scale which can also provide advantageous properties. This last situation is only possible if substantial no polyisocyanurate is formed, as this product is by definition crosslinked as will be discussed in more detail hereinbelow.

A polymer alloy product having one cross-linked polymer, i.e. one polymer network, may be considered as a pseudo interpenetrating network (pseudo IPN or semi IPN) and, if the other polymer(s) is also cross-linked it is considered a full interpenetrating polymer network (IPN or full IPN).

The weight ratio of the polyamide polymer forming compounds on the one hand and the polyurethane polymer forming compounds, the polyurea polymer forming compounds and/or the polyisocyanurate polymer forming compounds on the other hand, and consequently the polyamide/polyurethane/polyurea/polyisocyanurate weight ratio in the final product depends on the properties which are to be obtained. These properties relate to the desired end uses of the product, such as, for instance automobile body panels.

The polyamide polymer as such is mainly a stiff, i.e. a relatively inflexible polymer. However, depending on the amount of rubber which can be incorporated in the polyamide by way of the anionic polymerization activator, the polyamide polymer can have properties which are close to elastomeric products. Polyurethane polymers, polyurea polymers and polyisocyanurate polymers are, depending on the length, functionality and kind of the chain between the linkages, either a mainly stiff product or a more or less elastomeric product. For instance short chain polyols (equivalent weight up to 200) and chains

containing crosslinkages in polyurethane, polyurea and polyisocyanurate polymers normally will give a mainly stiff product. Long chain polyols (equivalent weight above 500) will give mainly elastomeric products. As apart from the polyamide polymer, a polyurethane pclymer, a polyurea polymer and/or a polyisocyanurate polymer is present in the polymer alloy according to the present invention, the present invention provides means whereby products having a wide range of properties can be obtained. These properties may range from a reinforced rubber (glass transition temperature (Tg) below room temperature) at for example a polyurethane/polyamide, polyisocyanurate/polyamide or polyurea/polyamide weight ratio of for instance 95/5 to high impact plastics (Tg above room temperature) at a weight ratio of at most 5/95.

In general, preferred weight ratios for high impact plastics of the present invention are from 5 to 40 parts by weight of polyurethane and/or polyisocyanurate (polyurethane and/or polyisocyanurate forming compounds) and from 60 to 95 parts by weight of polyamide (polyamide polymer forming compounds). For reinforced rubbers their ratios are for example, reversed. In addition to the amounts of polyamides, polyurethane, polyurea and polyisocyanurate, other, non-interfering additives may be present in amounts of up to 100 parts by weight per 100 parts of polyamide, polyurethane, polyurea and polyisocyanurate.

Usually the lower amounts of additives will be about 5 parts by weight per 100 parts of polymers. These additives will be discussed in more detail in relation to the molding process.

As indicated hereinabove, there are various factors governing the ratio of the varous polymer components of the polymer alloy. Taking into account that always a polyamide polymer is present in the polymer alloy, the choice between polyisocyanurate polymer, polyurea polymer and polyurethane polymer is determined by the various characteristics of these polymers. Of course it is also possible to use both a polyurethane polymer and a polyisocyanurate polymer together with the polyamide polymer in the polymer alloy, or both a polyurea polymer and a polyisocyanurate polymer together with the polyamide polymer, or even a combination of all four polymers mentioned.

It should be recognized, that while the polyamide polymer, the polyurethane polymer, the polyurea polymer and the polyisocyanurate polymer are hereinafter described singly in more detail, the process produces a product wherein such polymers are intermingled on a molecular level.

## THE POLYAMIDE POLYMER

The polyamide obtained in accordance with the present process in the final polymer alloy product is produced by the anionic polymerization of a lactam. The lactam can be any one of the $C_4$-$C_{14}$ lactams, such as 2-pyrrolidone, 2-piperidone, caprolactam and lauryllactam. Mixtures of two or more lactams can be used. Preferably caprolactam is employed to advantageously yield a product having superior physical properties. Also the polymerization rate of the preferred lactam is quite rapid.

Advantageously, the polyamide forming compounds employed anionically polymerize to yield nylon 6 homopolymers, nylon 6 random copolymers, or nylon 6 block copolymers.

The anionic polymerization of the lactam occurs in the presence of a polymerization catalyst and an activator. First, the anionic polymerization catalyst can be any one of the known catalysts such as sodium lactamate, potassium lactamate or any one of the Grignard compounds such as bromomagnesium lactamate. Mixtures of catalysts may be employed. These catalysts can be used as such, or in the form of a compound which reacts to yield such a catalyst, such as an alkali metal.

Second, numerous activators for the polymerization of lactam can be used in the present invention. The activator, or promoter as it is sometimes called, can advantageously comprise one or more compounds chosen from the group of lactam blocked isocyanates also comprising lactam blocked polyurethanes, and acyl lactam compounds.

As already indicated, the specific reactive compounds employed in the present process determine the type of polyamide obtained as well as its characteristics. More particularly, linear or branched polyamides are obtained when using acyllactam promoters especially if combined with a magnesium-type of catalyst. The difference between linear and branched polyamides is determined by the functionality of the activator as the polyamides chains are chemically bound to the activator compound at the locus of the activator group.

A lactam blocked isocyanate activator may result in a substantially non-linear polyamide. A lactam blocked isocyanate activator used in combination with a alkali-metal-type of catalyst may lead to cross-linking in the polyamide. For example, using an activator having a functionality of at least three may result in a substantial amount of cross-linking resulting in a polyamide network. Suitable activators include, for instance, a lactam blocked diisocyanate, and an acyllactam compound of low molecular weight, i.e. lower than about 500.

In another embodiment, the activator is the reaction product of an organic hydroxy compound, such as a polyfunctional hydroxy compound (polyol) having at least two hydroxyl groups per molecule, and a compound providing activator groups. Generally, the known polyols may be employed. Advantageously, the polyol is a polyetherpolyol, polyesterpolyol, polybutadienepolyol, siloxane containing polyol, polyisobutylene polyol, polycarbonate polyol, and/or a socalled 'polymer' polyol. The 'polymer' polyols as defined herein include graft polymers obtained by grafting one or more ethylenically unsaturated monomers onto a polyether polyol. Also polyurea dispersions in polyols (PUD) can be used as such. These polyurea dispersions can be obtained by dissolving a diamine or hydrazine together with a diisocyanate in stoichiometric amounts in a polyol and reacting the dissolved compounds to form a polyurea compound dispersed in the polyol.

The amount of the ethylenically unsaturated monomer grafted on the polyol ranges from 10-35 % by weight on the final grafted product ('polymer' polyol). Examples of suitable grafting monomers are especially acrylonitrile or a mixture of styrene and acrylonitrile. A suitable product of this type is known as Niax 31-28. Likewise, the amount of polyurea dispersed in the polyol is from 10-35 % by weight of the total dispersion.

Advantageously these 'polymer' polyols may be employed to

yield a product (nylon block copolymer) having a higher flexural modulus while, surprisingly, avoiding a decrease in impact resistance.

In this context, it is to be noted, that the polyurea dispersion described with reference to polyols, bears no resemblance to the polyurea polymer prepared in the process of the present invention. An essential aspect of this polyurea polymer as described with respect to the present invention lies in the substantially simultaneous preparation with the polyamide whereas the polyurea dispersion has been prepared prior to the molding process. It is to be noted however that a chemical similarity can occur.

Other examples of polyols that can advantageously be used are the poly(oxyethylene) and poly(oxypropylene) adducts or blends thereof of diols, triols and tetrols, polyols with polyether segments containing polyesters, polyester polyamine-polyols and polylactones. Polyols obtained by ethoxylating and/or propoxylating ethylene diamine, glucose, fructose, sucrose or trimethylolpropane are also suitable.

The polyols described hereinabove are mainly of a relatively high equivalent weight. Advantageously, the equivalent weight of these polyols is between 100 and 3000, more particularly ranges between about 500 and about 2500. In these ranges optimal properties of the final object are obtained, viz. a high impact-strength combined with a high flexural modulus without problems in preparing the activator, due to high viscosity.

The functionality of the polyol used, is preferably 2-10, more particularly 2-4. Especially advantageous is the use of a three- or four-functional polyol.

It is to be understood that any molecular weight, or equivalent weight, referred to herein are numerical average weights. Furthermore, the term equivalent weight of a polyol is understood to mean the numerical average weight of the polyol per hydroxyl group, i.e. the molecular weight divided by the functionality.

The compound providing activator groups is advantageously chosen from the group consisting of a lactam terminated diisocyanate which includes lactam terminated polyurethane or lactam terminated polurea, a diacyl lactam compound and a diacyl halide compound.

The lactam blocked diisocyanate that is used either as such or to prepare the polymeric polymerization activator, can be prepared by reacting lactam such as caprolactam, and a diisocyanate, such as hexamethylene diisocyanate, isophorone diisocyanate, toluene diisocyanate, methylene bis(phenyl-isocyanate) MDI and hydrogenated MDI, or modified MDI such as carbodiimide modified MDI, (Isonate 143L, Upjohn Company or Mondur PF, Mobay Chemical Corporation) and diol extended prepolymers of MDI (Isonate 181, or 191). Other possible isocyanates are XDI, $H_6XDI$, and hydrogenated TDI. Preference is given to the aliphatic diisocyanates such as hexamethylene diisocyanate, isophorone diisocyanate, hydrogenated MDI, H6XDI and hydrogenated TDI, because the lactam blocked aliphatic diisocyanates mentioned hereinbefore give the fastest lactam polymerization.

The diacyl lactam compound, for example, includes terephtaloylbiscaprolactam, adipoylbiscaprolactam, oxaloylbiscaprolactam, isophtaloylbiscaprolactam or mixtures of two or more of these compounds.

The suitable diacylhalide compounds include the halides corresponding to the above diacyllactam compounds. Advantageously, the halide compound is a diacylchloride corresponding to the above diacyllactam. In the case of the diacylhalide the reaction with the polyol is a simple ester-forming reaction. The reaction is preferably conducted in the presence of a basic compound which reacts with the hydrogen halide formed in this reaction, or the hydrogen halide formed can be removed by heat. This reaction product is thereafter reacted with lactam to yield an activator for the lactam polymerization.

The reaction of the lactam terminated isocyanate or the acyllactam compound and the polyol requires the presence of at least one catalyst. In general, it can be stated that suitable catalysts are the metals and metal compounds of Group IA as well as the Lewis acids. Examples of catalysts which can advantageously be used are sodium, potassium, magnesium, and compounds thereof. It is also possible to use compounds of copper, tin, titanium, vanadium, chromium, manganese, iron, cobalt, nikkel, calcium, zinc, and barium. Suitable compounds are the acetylacetonates, chlorides, bromides, lactamates, alcoholates

such as methoxides and ethoxides and carboxylates such as acetates. Catalysts include, for example, sodium lactamate, potassium lactamate, magnesium chloride, magnesium bromide, Grignard compounds, Cu (II) acetylacetonate, Sn (II) chloride, Sn (II) ethoxide, Sn (II) acetylacetonate, Ti (III) chloride, Ti (III) acetylacetonate, Ti (III) ethoxide, V (III) ethoxide, V (III) acetylacetonate, V (III) chloride, Cr (III) chloride, Cr (III) acetylacetonate, Mn (II) chloride, Mn (II) acetylacetonate, Fe (III) chloride, Fe (III) acetylacetonate, Co (III) chloride, Co (II) acetylacetonate, nickel acetylacetonate, nickel chloride, Cr (III) acetylacetonate, calcium ethoxide, calcium acetylacetonate, barium lactamate, barium chloride, barium acetylacetonate, and the chlorides, lactamates and acetylacetonates of zinc, calcium and aluminium.

The molar ratio of the polyol and the compound providing initiator groups depends on the functionality of these compounds as well as on the required amount of available reactive activator groups present in the activator. For example, reacting one mole of a diol with two moles of a diacyl compound, then on average, every hydroxyl group will have reacted with one diacyl compound. Using 1.5 moles of a diacyl compound, a product is obtained wherein, on average, two diols, are coupled to each other by one diacyl molecule (diacyl-diol-diacyl-diol-diacyl) (chain-extension).

Isocyanate-terminated urethane prepolymers can also be used for preparing lactam blocked compounds which are to be used as activator for the anionic polymerization of lactam. The lactam blocked compounds are prepared by the reaction of the isocyanate-terminated prepolymer with lactam at an isocyanate/lactam equivalent ratio of about 1 : 1. The isocyanate terminated-prepolymers are prepared by the reaction of a diisocyanate with a diol or triol of polyoxyalkylene ether glycol or of polyether diol.

Using an activator, prepared, in part, from a polyol, the polyamide in the polymer alloy product is a nylon block copolymer having at least one polyol-block and, depending on the number of hydroxyl groups in the polyol, two or more nylon blocks.

The polyamide prepared in accordance with the above decrip-

tion, if use is made of a two functional compound yielding activator groups, can be a compound of the formula

$$R_{Ci} - [-\overset{O}{\overset{\|}{C}}-(-\overset{H}{\overset{|}{N}}-X-\overset{O}{\overset{\|}{C}}-)_n-L]_{bi}$$

wherein

- X is a substituted or unsubstituted alkylene-group having 3-12 carbon atoms,
- $b_i$ is an integer > 2, preferably not more than 4,
- Ci is 0 or 1,
- n is the degree of polymerization for each nylon block, and is preferably > 10 and < 1000,

L is 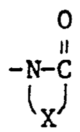

and R has the following configuration

$$R'-[-O-(-\overset{O}{\overset{\|}{C}}-X-\overset{H}{\overset{|}{N}}-)_{a_i}-\overset{O}{\overset{\|}{C}}-Y]_{b_i}, \text{ or}$$

Y

wherein R' is the residual of a polyol, such as

- polyether polyol
- polybutadiene polyol
- polyester polyol containing one or more polyether blocks
- grafted polyether polyol,

$a_i$ has a value > o, and

Y is

- $-\underset{H}{\underset{|}{N}}-Z-\underset{H}{\underset{|}{N}}-$
- a hydrocarbon radical,
- an ether radical,

Z being the divalent hydrocarbon part of a diisocyanate.

The value of $b_i$ corresponds to the functionality of the hydroxy compound used. This value also corresponds with the functionality of the activator. If a pure compound is used $b_i$ is an integer. However, if a mixture of two or more different hydroxy compounds is used, the value of $b_i$ is the mean value of the functionality which need not necessarily be an integer.

For example if a mixture of 25 mole % of a diol, and 75 mole % of a tetrol of the same molecular weight is used, the value of $b_i$ will be 3.5.

Depending on the method used to prepare the activator compound, $a_i$ can have a specific value.
If a lactam compound is used, or if molten lactam is used as solvent, it is possible that some lactam blocks are incorporated in the activator. In that case $a_i$ is larger than zero. Of course it is possible that if $b_i$ is larger than one, that in one nylon block copolymer, for each group $a_i$ has another value.

The Sibal et al method described hereinbefore, yields a polyamide having $a_i$ = zero since no lactam is present during the reaction of polyol and diisocyanate. A like result is obtained using the diacyl-halide compounds described in, for instance, the European patent application Nos. 67693, 67694 and 67695.

If however a diacyl lactam compound is prepared from a diacyl lactam and a polyol, as described in US patent No. 3,862,262, a part of the lactam will be incorporated in the activator, whereas another part will split off. The value of $a_i$ will then be between 0 and 1.

The above formula and elucidation thereof are based upon the premise, that use is made of a two-functional compound yielding activator groups, If a monofunctional or a three or higher functional compound yielding activator groups is used, the man skilled in the art knows, taking into account the chemical structure of the compound, in what way the various parameters are to be changed in the formula.

The ratio's of the various polyamide forming components depend on their functionality and on the properties which are required in the end product, such as impact strength, flexural modulus and heat distortion temperature.

Generally in the case of a nylon block copolymer based upon a rubbery polyol, the amount of polyol ranges from 5-35 wt.%, more in particular from 5 to 25 wt.% with respect to the total amount of polyurethane and polyamide.

Combining the preferred polyols used, having a functionality 2-10 more advantageously 2-4, with a difunctional compound yielding activator groups such as a diacyl-functional or a diisocyanate-functional compound, yields polymeric activator having 2-10, more advantageously 2-4 activator groups per molecule, provided that no chain extension has occured, as described hereinabove.

With respect to the amount of lactam in a RIM process, at least about 1.2 equivalent % of activator groups must be present as otherwise the reaction rate becomes too low.

The amount of catalyst can vary within wide ranges, such as from as low as 0.05 eq. % to as high as 10 eq. % w.r.t. lactam. An advantageous range is from about 0.5 to 2.0 eq. %.

Anionic lactam polymerization essentially requires anhydrous conditions. The presence of water can inactivate the catalyst. Furthermore, water reacts with the isocyanate present as one of the other polymer forming compounds. These anhydrous conditions are usually obtained by distilling off any water present together with some lactam, as is well known in the art. Of course, this is quite distinct from hydrolytically polymerizing lactam wherein water initiates the reaction. The hydrolytic reaction process, however, includes unduly long (several hours) reaction/process times.

If lactam is polymerized using a low molecular weight activator, such as caprolactam terminated hexamethylene diisocyanate or terephthaloyl biscaprolactam, the product obtained is a nylon homopolymer. In the case of caprolactam, a nylon-6 homopolymer. Nylon-6 copolymers are obtained by polymerizing caprolactam, together with at least one other lactam, such as laurino lactam, using the same low molecular weight polymerization activators as used for the preparation

of nylon-6 homopolymers.

Depending on the nature of the product to be obtained, the man skilled in the art can choose between the various Nylon-6-polymers.

Due to its simplicity an advantageous embodiment is the use of a nylon-6 homopolymer, in combination with compounds forming an elastomeric polyurethane polymer, polyurea polymer and/or a polyisocyanurate polymer.

## THE POLYUREA POLYMER

The polyurea polymer forming compounds comprise at least one polyamine or hydrazine containing compounds, at least one polyisocyanate and optionally at least one urea polymerization catalyst.

As indicated hereinbefore, controlling the combination of reactants determines the type of polyurea polymer obtained in the final product in accordance with the present invention. For example, controllably selectively correlating reactants enables the practitioner to obtain a linear or a cross-linked product (network).

A cross-linked polyurea may be obtained with various combinations of polyisocyanates and polyamines. For example, such combinations could include a diisocyanate and three or higher functional polyamine, an NCO terminated prepolymer (from diisocyanate and diol or diamine) and a three or higher functional polyamine, a triisocyanate and two or higher functional polyamine.

As linear polyurea can be obtained by reacting approximately equivalent amounts of a diisocyanate and a difunctional polyamine. Preferably a slight excess of isocyanate is employed.

At least part of the amine groups required for the polyurea reaction is advantageously provided by polyamines having equivalent weights of 100 to 3000 and, preferably, range between 1,000 and 2,500 and containing 2 to 4 amine groups per molecule. Suitable amines are 1-methyl-3,5-diethyl-2,4 diaminobenzene, 1-methyl-3,5 diethyl-2,6 diaminobenzene (both of these materials are also called diethyltoluene diamine or detda), 1,3,5-triethyl-2,6 diaminobenzene, 3,5,3',5'-tetraethyl-4,4'' diaminodiphenylmethane, 2,4- and 2,6-diaminotoluene, 2,4'- and/or 4,4'-diaminodiphenylmethane, 1,3- and

1,4-phenylenediamine, naphthylene-1,5-diamine and triphenylmethane-4,4',4''-triamine. There may also be used difunctional or higher polyfunctional aromatic amino compound in which some or all of the amino groups are secondary amino groups, as for example, in the case of 4,4'-di-(methylamino)-diphenylmethane or 1-methyl-2-methylamino-4-aminobenzene.

Liquid mixtures of polyphenyl-polymethylene polyamines of the type obtained by aniline-formaldehyde condensation, methylene-bis-chloroaniline, 1,3-diethyl-2,4 diaminobenzene, 2,4-diaminomesitylene, primary and secondary amine terminated polyethers such as jeffamine d2000 and jeffamine t3000.

The above mentioned amines may be used either alone or in mixtures with each other.

Suitable catalysts are e.g. tertiary amine containing compounds.

It is to be noted, that the use of a catalyst is not necessary as the nitrogen present in the polyamine or hydrazine containing compound catalyses the reaction with isocyanate.

The polyisocyanates used in the present invention include aromatic, aliphatic, araliphatic or cycloaliphatic diisocyanates in pure or crude form, e.g. toluene diisocyanates, 4,4'diphenylmethane diisocyanate (MDI), polymethylene polyphenylisocyanates, isophorone diisocyanate (IPDI), hexamethylene diisocyanate and xylylene diisocyanate (XDI) as well as modified MDI, for example carbodiimide-modified MDI, hydrogenated aromatic diisocyanates like hydrogenated MDI, TDI or XDI. Also, suitable are the polyfunctional isocyanates obtained by catalytic trimerization of a diisocyanate (e.g. trimer derived from IPDI) or isocyanate-terminated polyether triol obtained by the reaction of one mole of a polyether triol with at least three moles of a diisocyanate, e.g. Desmodur N (a trade mark of Bayer A.G.). Adducts of diisocyanates e.g., TDI, MDI or HDI with a triol, e.g. trimethylolpropane can also be used.

Preferred are aromatic diisocyanates such as MDI, carbodiimide-modified MDI and toluene diisocyanate.

The ratio of terminal isocyanate groups in the polyisocyanate to the amount of amine groups used for the urea reaction is 1.00 : 1 to 1.05 : 1.

In the present invention the term polyurea polymer is used to

indicate the product obtained by the reaction of polyisocyanate and polyamine or an equivalent compound such as hydrazine containing compound without a substantial amount of trimerization occuring.

As indicated hereinabove the chains between the urea bonds may contain isocyanurate groups. However the decisive point is now the polymer forming compounds have reacted in the mold.

## THE POLYURETHANE POLYMER

The polyurethane forming compounds comprise at least one polyol, at least one polyisocyanate and at least one urethane polymerization catalyst.

As indicated hereinbefore, controlling the combination of reactants determines the type of polyurethane obtained in the final product in accordance with the present invention. For example, controllably selectively correlating reactants enables the practitioner to obtain a linear or a cross-linked product (network).

A cross-linked polyurethane may be obtained with various combinations of polyisocyanates and polyols. For example, such combinations could include a diisocyanate and a three or higher functional polyol, an NCO terminated prepolymer (from diisocyanate and diol) and a three or higher OH-functional polyol, a triisocyanate and two or higher functional polyol.

A linear polyurethane can be obtained by reacting approximately equivalent amounts of a diisocyanate and a difunctional polyol. Preferably a slight excess of isocyanate is employed.

At least part of the hydroxyl groups required for the polyurethane reaction are advantageously provided by polyols having equivalent weights of 100 to 3000 and, preferably, range between 1,000 and 2,500 and containing 2 to 4 hydroxyl groups per molecule.

In a preferred embodiment, the said polyol comprises one or more polyols of the group of polyoxyalkene glycols contain $C_2$ to $C_4$ oxyalkene units, addition products of a $C_2$ to $C_3$ alkene oxide to a trihydroxy compound, polylactone-diols and triols derived from $C_5$ to $C_{12}$ lactones, hydroxyl terminated polyesters, hydroxyl group containing polyacrylates and hydroxyl group containing graft polymers containing chains based on acrylonitrile or mixtures of acrylonitrile and styrene (hereinbefore designated as polymeric polyols).

The suitable polyols include the polyoxyalkene glycols containing $C_2$ to $C_4$ oxyalkylene units, e.g. polyethylene glycol, polypropylene glycol, polytetramethylene glycol and random or block copolymers of ethylene oxide and propylene oxide, polylactone polyols derived from a $C_5$ to $C_{12}$ lactone, as may be obtained by polymerizing caprolactone, valerolactone or oenantholactone in the presence of a polyfunctional initiator, dihydroxyl-terminated polyesters, polycarbonate-diols, polyhydroxyl group containing polyacrylates, hydroxyl group-containing polybutadiene, hydroxyl group-containing graft polymers containing polymer chains based on e.g. acrylonitrile, styrene or combinations thereof, and addition products of ethylene oxide or propylene oxide to a polyfunctional, and preferably trifunctional, hydroxyl compound, for example glycerol or trimethylolpropane. Polyesters which may be used as polyols may be obtained by reacting one or more $C_4$ to $C_{12}$ aliphatic and/or aromatic carboxcylic acids, e.g. adipic acid, azelaic acid, phthalic acid or terephtalic acid, with one or more $C_2$ to $C_{12}$ aliphatic and/or cycloaliphatic diols, e.g. ethylene glycol, diethylene glycol, or 1,4-(hydroxymethyl)-cyclohexane, in proportions to provide dihydroxyl terminated polyesters. The use of the polyurea dispersion described above in relation to the activator for the lactam polymerization is also possible. The remarks in relation to these dispersions made in that context are also applicable here.

In an embodiment of the invention a low molecular weight compound such as a polyol that can act as chain extender is used in addition to the polymeric polyol, i.e. compounds having a molecular weight of from 62 up to and including 350. Examples are aliphatic unbranched diols e.g. ethylene glycol, 1,3-propylene glycol, 1,4-butanediol, 1,5-pentane diol, 1,6-hexanediol and 1,10-decanediol, branched diols e.g. 1,2-propane diol, 1,2-butane diol, 1,3-butane diol and 2,2-dimethyl-1,4-butanediol, low molecular weight polyalkylene glycols e.g. diethylene glycol, triethylene glycol, dipropylene glycol and

2-hydroxy-ethoxy-1-propanol, or cycloaliphatic diols such as 1,4-(hydroxymethyl)-cyclohexane or bishydroxymethyl-hydroquinone. Also usable are triols such as e.g. glycerol and trimethylolpropane. Mixtures of these compounds can also be used.

Advantageously the low molecular weight compound used is a diol, more in particular an aliphatic diol with 2-6 carbon atoms, such as 1,4 butanediol. The amount of low molecular weight diols is less than 50 wt.% of the polyols used, more in particular it is between 10 and 30 wt.%.

The polyisocyanates used in the process of the invention include aromatic, aliphatic, araliphatic or cycloaliphatic diisocyanates in pure or crude form, e.g. toluene diisocyanates (TDI), 4,4'diphenylmethane diisocyanate (MDI), polymethylene polyphenylisocyanates, isophorone diisocyanate (IPDI), hexamethylenediisocyanate and xylylene diisocyanate (XDI) as well as modified MDI, for example carbodiimide modified, hydrogenated aromatic diisocyanates like hydrogenated MDI, TDI or XDI. Also, suitable are the polyfunctional isocyanates obtained by catalytic trimerisation of a diisocyanate (e.g. trimer derived from IPDI) or isocyanate-terminated polyether triol obtained by the reaction of one mole of a polyethertriol with at least three moles of a diisocyanate, e.g. Desmodur N (a trade mark of Bayer A.G.). Adducts of diisocyanates e.g., TDI, MDI or HDI with a triol, e.g. trimethylolpropane can also be used.

The ratio of terminal isocyanate groups in the polyisocyanate to the amount of hydroxyl groups used for the urethane reaction is 1.00 : 1 to 1.05 : 1.

One or more catalysts accelerating the urethane reaction are usually used such as, for example, the tertiary amines, e.g. triethylene diamine, triethyl amine, and tin containing compounds, such as tin salts of carboxylic acids e.g. dibutyltin diacetate, dibutyltin dilaurate or stannous octoate.

In the present invention the term polyurethane polymer is used to indicate the product obtained by the reaction of polyisocyanate and polyol, without a substantial amount of trimerization occuring.

As indicated hereinabove the chains between the urethane bonds may contain isocyanurate groups. However the decisive point is how the polymer forming compounds react.

THE POLYISOCYANURATE

The polyisocyanurate polymer forming compounds comprise a trimerization catalyst and the compounds reacting to give the polyisocyanurate, i.e. either an isocyanate groups-containing prepolymer or a polyol and a polyisocyanate.

Due to the nature of trimerization, the use of polyfunctional isocyanate leads by definition to the formation of a polymeric network. The incorporation of a sufficient amount (i.e. more than about 5 % by weight) of polyisocyanurate polymer forming compounds in the mixture, will thus lead to the formation of a pseudo- or a full IPN, depending on the nature (linear or network) of the other component(s).

The trimerization catalyst can be chosen from the compounds which catalyze the trimerization of isocyanate groups to isocyanurate. Suitable compounds are for example alkalimetal lactamates such as sodium or potassium lactamate, hexahydrotriazine derivatives such as 1,3,5 tris (dimethylaminopropyl) hexahydrotriazine, zwitter ion compounds such as sulfonium zwitter ions and amine-imide zwitter ions, tertiary alkanolamine compounds such as Dabco-T, alkali metal carboxylates such as potassium octoate or potassium acetate, tertiary amines in combination with epoxy compounds, tertiary amines in combination with alkali-metal carboxylates, tertiary amines in combination with alkylene-oxide e.g. ethylene or propylene oxide and an organic acid (quatertiary ammonium carboxylates) such as Dabco TMR and combinations thereof.

In a preferred embodiment as trimerization catalyst a lactamate catalyst is used as this catalyst also catalyzes the polymerization of lactam. Thus one component less is needed for the process of the invention.

Depending on the nature of the compounds used for the trimerization, it is possible to use a one component or two component trimerization system. The one component system is in fact a two-step

process, whereas the two component system is a one step process.

In the two step, one component system a polyisocyanate compound is used having terminal isocyanate groups which are trimerized to yield a polymeric network, optionally in combination with a small amount of chain extender. This amount of chain extender will not exceed 10 % by weight of the components used to build the isocyanurate polymeric network. As the polyisocyanurate polymeric network is usually intended to impart elastomeric properties, usually a relatively long chain has to be present between two adjacent isocyanurate groups. This is usually obtained by reacting a polyol or a polyamine, having elastomeric properties, with an excess of diisocyanate, to yield an isocyanate terminated polyurethane prepolymer. This isocyanate terminated prepolymer is then reacted to yield the polyisocyanurate polymer network.

In the one step, two component method both a polyol and a polyisocyanate are introduced together into the mixture and trimerized with the aid of a suitable catalyst in the mold to yield a polyisocyanurate polymeric network. Due to the nature of the components, the reaction cannot be controlled so well as in the case of the one component method as simultaneously some trimerization and some urethane formation occurs. It is rather difficult to control the relative ratios of reaction of the various components yielding these different products.

When a polyol and a polyisocyanate are used as the compounds for the polyisocyanurate polymer, together with the trimerization catalyst also a polyurethane catalyst can be used.

The polyols and the polyisocyanates to be used in both the one step and the two step method are substantially the same as those that are described hereinbefore with relation to the preparation of the polyurethane. More in particular it is noted that as difunctional polyol are suitable polyoxypropylene glycols, polytetramethylene ether glycols, polyethylene terephthalate based polyesters, polycarbonate diols, polybutadiene diols and polyisobutylene diols having an equivalent weight from 500 to 2000.

Suitable trifunctional polyols are the glycerol based polyethers and the trimethylolpropane based polyethers having an equivalent weight from 500 to 2000.

The diisocyanates to be used in both the one step and the two step method for preparing the polyisocyanurate network are the aromatic diisocyanates, although aliphatic isocyanates can be used. An enumeration of suitable aromatic diisocyanates has been given in relation to the description of the polyurethane component.

As polymer precursor compounds it is necessary to use both polyisocyanate and polyol, in such proportions that both the urethane reaction and the trimerization can occur simultaneously.

It is to be noted, that the description of the polyisocyanurate polymer is either based upon the reaction of a urethane groups-containing prepolymer, or of a polyisocyanate with a polyol. It is however to be understood, that the same applies to urea-groups containing prepolymers and the reaction of polyisocyanate with polyamine.

The term polyisocyanurate polymer is used to define the polymer obtained by the in situ trimerization of polyisocyanurate in the mold.

The urea or urethane reaction of prepolymers in the mold containing isocyanurate groups is not intended to be encompassed by this definition.
These products are either polyurea polymers or polyurethane polymers.

## THE MOLDING PROCESS

In addition to the above description of the various components to be used in the process of the preparation of the polymer alloy, the process itself requires consideration of various parameters.

The process comprises introducing a mixture of substantially stable reactant streams into a mold, in which mold the various components are reacted to form polyurethane, polyurea, polyisocyanurate and polyamide polymers respectively, thereby yielding a polymer alloy composed of said polymers and recovering said polymer alloy from said mold. According to the invention it is possible to use a process which has a close analogy to the process used in the anionic polymerization of lactam, known as pouring. In the polyurethane technology such a process is also known.

In such a process the various components are mixed in a container at a temperature above the solidification temperature of the mixture and of the components, and thereafter are poured from said container into a mold.

However, in a preferred embodiment the present invention is used in the form of a so-called reaction injection molding process. As is indicated in the introduction of the present application, reaction injection molding (RIM) is a one shot injection method of liquid components usually by impingement into a mold where rapid polymerization occurs resulting in a molded plastic product.

As is conventional in a RIM process at least two substantially stable reactant streams, each containing a portion of the components required to obtain the polymer alloy product, all the reactant streams together containing all the product precursor compounds, are mixed in a suitable mixing device, whereafter the resulting mixture at least containing all the necessary components is injected into a mold. After introduction into the mold, which is kept at a temperature sufficiently high to effect the formation of the polymers, rapid polymerization occurs to yield the polymer alloy.

It is essential that the reactant streams are substantially stable prior to mixing in order to avoid undesirable side reactions that may occur in these streams. Thus the various polyurethane polymer forming compounds, polyurea polymer forming compounds, polyisocyanurate polymer forming compounds, and polyamide polymer forming compounds are divided into at least two reactant streams. Each stream will not contain all of the respective polymer forming compounds, in order to ensure that substantially no polymerization occurs prior to the mixing of the streams and introduction of the mixture into the mold.

Hereinbelow some examples are given of possible compositions of various streams taking into account the aggregate composition of the total mixture. However, these examples should not be considered to be a complete enumeration of all possibilities. The are only presented by way of example, and the man skilled in the art of polyamide polymer formation, polyurea polymer formation, polyurethane polymer formation

and polyisocyanurate polymer formation will know which of the reactants needed for each polymer formation are known to react with each other and should not be incorporated in the same stream.

If the streams in the aggreate contain only polyamide polymer and polyurethane polymer forming compounds a suitable combination of components for one stream comprises the polyurethane catalyst, the anionic polymerization catalyst, the polyol and the lactam. The other stream contains the activator and the isocyanate. If however the streams in the aggreate contain only polyamide polymer and polyisocyanurate polymer forming compounds and at the same time the polyisocyanurate polymer forming compounds are directed to a one step polyisocyanurate formation, the same subdivision of components can be used, with the exception that the polyurethane catalyst is replaced by the trimerization catalyst. In case the preferred trimerization catalyst, potassium lactamate, is used, it is of course only necessary to delete the polyurethane catalyst.

In the above two examples, possible undesired reactions could occur if the polyisocyanate and the polyol were combined in one stream. It is also possible to use a solution of polyisocyanate in lactam, although isocyanate is known to react with lactam. However, it is not preferred to keep such a solution too long at a relatively high temperature. In view thereof the polyisocyanate is preferably introduced into the mold as a separate reactant stream or into one of the other reactant streams shortly before the mixing thereof with the other reactant stream or streams.

If the streams in the aggregate contain polyamide polymer and polyisocyanurate polymer forming compounds, wherein the polyisocyanurate polymer forming compounds are of the one component system, one stream comprises the trimerization catalyst, the anionic polymerization catalyst and preferably lactam as a solvent. The other stream contains the anionic polymerization activator and the isocyanate groups containing prepolymer.

As indicated hereinabove, it is also possible to use both a urethane polymerization catalyst and a trimerization catalyst. These catalysts are preferably both contained in the same product precursor

streams.

In this situation it is however necessary to include a polyol in the system, and optionally a second polyisocyanate. The polyol can advantageously be incorporated in the same stream as the urethane polymerization catalyst whereas for the polyisocyanate the same considerations apply as hereinabove.

The situation is approximately the same if instead of polyurethane polymer forming compounds, the precursor-product streams contain in the aggregate polyurea polymer forming compounds. The polyamine used therein replaces the polyol. If instead of polyol or polyamine use is made of a mixture of both polyol and polyamine a polymer alloy is obtained containing both polyurethane polymer and polyurea polymer, provided that a suitable catalyst system is used if necessary.

In case also a trimerization catalyst is added to the system, an alloy of all four of the polymers is obtained.

It is of course necessary to take into account the various interactions which can occur between the components present in the system.

Especially it is important to make sure that the various catalysts do not inactivate each other.

A broad range of volume ratio's of the various reactant streams can be used. An important factor which governs this ratio is the efficiency of the mixing. Preferably the volume ratio between the various streams does not exceed 4, more in particular does not exceed 2. Most advantageously, the volume ratios of the reactant streams is about 1.

As the bulk of the various reagent streams is advantageously comprised of the lactam monomer to be polymerized to polyamide, an adjustment of the volume ratio of the reactant streams is easily obtained.

It is further possible to conduct the polymerization reaction in the presence of one or more additives conventionally incorporated in either nylon block copolymer and/or polyurethane components. Such additives include plasticizers, fillers and reinforcing agents such as glass fibers, dyes, pigments, stabilizers, antioxidants, foaming

agents, internal mold release agents and the like. These fillers and reinforcing agents may be present in amounts of up to about 50 wt.% of the product. More particularly, the amount ranges to between about 1 and about 25 wt.%, depending on the properties required.

Suitable fillers and reinforcing agents comprise milled or chopped glass fibers such as the milled 1/16'', or the chopped 1/8'' silane treated glass fibers, but also products like wollastonite, flaked mica and the like. Advantageously a combination of a fiber and a non-fiber product such as a combination of 1/16'' milled silane treated glass fiber and mica or wollastonite is employed, in a ratio between about 30 to about 70 and about 70 to about 30 parts by weight. An important advantage of such combination is that isotropic properties in the product are enhanced. This means that unlike with glass fibers alone, the properties of the final object are independent of the direction in which they are measured.

The use of glass-fiber results in decreased thermal expansion, lower shrinkage, and an increase of flexural modulus. A negative aspect thereof is that the impact strength decreases. The amount of glass fibers that can be introduced into the product with the presently available machinery, has an upper limit which is determined by the fact that the dispersion of glass-fibers in lactam has to be pumped into a mold. With 1/16'' milled glass-fibers this upper limit is about 25 wt.% whereas generally only a lower amount of chopped 1/8'' glass fibers can be used.

The presence of all additives in all reactant streams is not required. For example, the pigment or antioxidant may be present only in one stream. The very efficient mixing which occurs in a RIM process will ensure that any additive(s) is (are) distributed substantially homogeneously throughout the final product. However, to obtain a high proportion of glass fibers or other fillers in the final product, the quantity of fibers is divided among the reactant streams.

In the process according to the invention the polymer alloy is prepared by mixing the at least two reactant streams, each stream containing a portion of the components required to obtain the polymer alloy product, preferably in a mixing head, and introducing the

resulting mixture into a mold. This mold is preferably heated to a temperature above 100 °C as hereinafter further elucidated.

The temperature at which the reactant streams are kept prior to mixing with each other is not critical. The temperature should be above the melting point of the lactam since preferably the lactam is employed as the solvent for the other reactants. Nonetheless, the temperature is maintained to avoid reactant degradation or reactant volatility at atmospheric pressure. This avoids pressurized equipment. For example, if a caprolactam solvent is employed, a suitable temperature range is from about 80 °C to about 100 °C.

Depending on the required end product, the specific solvent is chosen. It is of course necessary that the solvent reacts with the other components yielding the polymer alloy as one of the aspects of the invention lies in the absence of substantial further processing steps.

For example in case a reinforced rubber is prepared it is not necessary to employ the lactam as the only solvent. It is also possible to have reactant streams using different solvents such as liquid polyols, or even to use these polyols as the only solvent. It is also possible to use specific prepolymers used in the process of the invention as solvent.

In view of the mixing procedure it is preferred that the various reactant streams have approximately the same temperature prior to mixing. In that case undesired effects due to the mixing of colder and warmer streams are avoided. Unlike polyurethane RIM this requires that the lines through which the reactant streams flow to the mixing device and the mold are at least insulated, or more advantageously, controllably heated by steam, oil, or electricity.

After mixing all the reactant streams the aggregate mixture is introduced into a heated mold which is kept at a temperature favoring a rapid polymerization rate. Since the urethane reaction, the urea reaction and the trimerization readily occur at room temperature, the mold temperature is mainly governed by the lactam polymerization. Advantageously the temperature of the mold is above the melting point of the lactam solutions, but below the melting point of the resulting

product. Temperatures advantageously range from about 120 to about 175 °C.

The residence time in the mold depends on the reaction rate of the various components and the properties of the polymer alloy. It can advantageously be between 10 seconds and 60 minutes. Depending on the size of the mold and the components used it is even possible to exceed the residence time of 60 min, for example if a very large mold is used and the final product should be free of a all stresses. In the case of a RIM process, the residence time is usually much shorter, advantageously between 10 seconds and 10 minutes. More in particular, residence times of up to 2 or 3 minutes are preferred in view of the economy of the process.

The pressure required for introducing the mixture into the mold is not critical. One of the major advantages of the present process is the low viscosity of the components, compared to thermoplastic polymers, thus requiring low injection pressures.

## THE MOLDED PRODUCT

The invention is also directed to a molded product prepared by a process comprising introducing a mixture of substantially stable reactant streams into a mold, said mixture in the aggregate, containing

1) polymer forming compounds forming at least one polymer of the group consisting of polyurethane polymer, polyurea polymer and polyisocyanate polymer, and

2) polyamide polymer forming compounds,

said polyurethane polymer forming compounds including a polyol, a polyisocyanate, and a polyurethane polymerization catalyst,
said polyurea polymer forming compounds including a polyamine or hydrazine containing compound, a polyisocyanate and optionally a urea polymerization catalyst,
said polyisocyanurate polymer forming compounds comprising an isocyanate groups containing prepolymer, or a polyol and a polyisocyanate, and a trimerization catalyst,
said polyamide polymer forming compounds including lactam, an anionic polymerization catalyst and a polymerization activator,
said polyurethane polymer forming compounds, said polyisocyanurate polymer forming compounds, said polyurea polymer forming compounds and said polyamide polymer forming compounds reacting to form polyurethane, polyurea, polyisocyanurate and polyamide polymers respectively in said mold, thereby yielding a molded product composed of said polymers, and recovering said product from said mold.

More particularly the invention is directed to a reaction injection molded product composed of

1. a polyurethane polymer and/or a polyisocyanurate polymer, and
2. a polyamide polymer.

In one of the embodiments of the invention the reaction injetion molded product as described hereinabove is an interpenetrating polymer network of said polyamide polymer and said polyurethane polymer and/or said polyisocyanurate polymer, in which the polymers are crosslinked independently.

In another embodiment of the invention only one of said polyamide polymer and said polyurethane polymer is substantially linear or branched. In that case a pseudo or semi IPN is present. In a third embodiment of the product according to the present invention both said polyamide polymer and said polyurethane polymer are substantially linear or branched thus leading to a product based upon a polymerblend.

As discussed hereinbefore the terms polyisocyanurate polymer are inteded to define a polymer which is in its final form by trimerization of polyisocyanates. As discussed herebefore it is quite possible that the polyisocyanurate polymer contains urethane linkages in the chains between two adjacent isocyanurate rings.

Contrary thereto the term polyurethane polymer is used to define a polymer which is obtained by reacting in the mold a polyol and a polyisocyanate, substantially without trimerization taking place. Of course it is quite possible that in one or both of the components reacting together to form the polyurethane a prepolymer is present which is obtained by trimerization of diisocyanates. This can

especially be the case with the polyisocyanate component.

The above discussion indicates, that it is possible that in terms of chemical structure both the polyisocyanurate polymer and the polyurethane polymer defined in terms of chemical structure, the same product. However, different definitions are used in these cases as they have been prepared by different processes.

Examples 1-3 and Comparative Examples A-C

(Polyurethane and polyamide alloys)

In 25 g of anhydrous caprolactam 5 g of an carbamoyl-lactam activator and 2 g of Pluracol 220 (primary hydroxyl groups containing polyether triol with equivalent weight of 2078) were dissolved at 90°C. The activator was prepared by first reacting HDI and Pluracol P 380, a primary hydroxyl groups containing polyethertriol with equivalent weight of 2244, in an equivalent ratio of 2 to 1. The resulting isocyanate terminated polyurethane was reacted with caprolactam to yield a trifunctional activator.

In a second portion of 25 g of anhydrous caprolactam 10 meq of lactam magnesium bromide dissolved in caprolactam (10 g combined weight) and two drops of T-9 (Sn II octoate) were dissolved at 90 °C. The total amount of caprolactam in the aggregate streams amounted to 57.9 grams.

The two caprolactam solutions and 0.42 g of Isonate 143 L (liquid MDI) were mixed at 120 °C. The resulting mixture was introduced into a mold which was kept at 130 °C. The product recovered from the mold possessed the mechanical properties given in Example 1 in Table I.

Two other experiments were performed as described above wherein the total amount of the rubber phase (polyether plus polyurethane) was increased by increasing the amounts of polyurethane. The properties thereof are given in Example 2 and 3 in Table I.

For comparison three nylon block copolymers were prepared using only the polyamide forming components, without the polyurethane forming compounds. The amounts of the rubber phase (only polyether) in these copolymers are somewhat higher than those contained in the products of Examples 1-3.

The results are presented in Table II. A comparison of the two tables clearly shows that the invention provides for markedly superior products even at relatively low levels of rubber phase.

Table I

| Ex. | Rubber Phase wt.% | Before Water Absorption: Tensile Strength (kpsi/MPa) | Elongation (%) | Izod (J/m) | After Water Absorption (for one week): Tensile Strength (kpsi/MPa) | 100 % (kpsi/MPa) | Elongation (%) | Tear Strength (pli/kN/m) | Izod (J/m) |
|---|---|---|---|---|---|---|---|---|---|
| 1 | 12.4 | 9.81<br>67.6 | 36.7 | 89 | 4.9<br>33.8 | 4.5<br>30.6 | 220 | 880<br>154 | 221 |
| 2 | 18.5 | 9.61<br>66.3 | 30.0 | 111 | 4.7<br>32.4 | 3.85<br>26.20 | 230 | 801<br>140 | 256 |
| 3 | 22.5 | 7.15<br>49.3 | 98 | 84 | 4.7<br>32.4 | 3.57<br>24.30 | 338 | 853<br>149 | 400 |

Table II

| | | Before Water Absorption | | | After Water Absorption (for one week) | | | |
|---|---|---|---|---|---|---|---|---|
| Ex. | Rubber Phase wt.% | T.S.* (kpsi/MPa) | 100 % modulus kpsi/Mpa | % Elon-gation | T.S.* (kpsi/MPa) | 100 % Modulus (kpsi/MPa) | % Elon-gation | Tear Strength (pli/kN/m) |
| A | 44.1 | 1.6<br>11.0 | 0.8<br>5.7 | 321 | 1.5<br>10.3 | 1.0<br>7.2 | 433 | 585<br>102.0 |
| B | 29.4 | 1.5<br>10.3 | 1.4<br>9.9 | 120 | 1.3<br>8.6 | - | 76 | 459<br>80 |
| C | 14.8 | 5.3<br>36.8 | - | 33 | 3.0<br>21.0 | - | 84 | 131<br>23 |

* Tensile Strength

-36-

Examples 4-6 (polyurethane and polyamide alloys)

In the same manner as example 1, mixtures were prepared using different amounts of components.

The used adducts are:

- Desmodur L 2291 A (Bayer) blocked with a stoechiometric amount of caprolactam
- P 380 (polyoxypropylene triol, eq. wt. 2244, BASF Wyandotte) reacted with Desmodur W (NCO/OH = 3/1) and the resulting isocyanate terminated prepolymer blocked with a stoichiometric amount of caprolactam
- Acyllactam prepared by reacting one equivalent of polyoxypropylene glycol (with a molecular weight of approximately 4000) with two equivalents of terephtaloyl dichloride and thereafter blocked with a stoichiometric amount of caprolactam.

The polyamide catalyst used is lactam magnesiumbromide dissolved in caprolactam (1 eq/kg).

The urethane catalyst us T-9 (Sn II octoate).

In table III the compositions, conditions and solidification times are given.

Table III

| Ex. no. | | 4 | 5 | 6 |
|---|---|---|---|---|
| polyether | wt. % | 20 | 26.8 | 27.7 |
| caprolactam | g | 20 | 20 | 20 |
| polyamide catalyst | g | 16.2 | 16.2 | 5.9 |
| urethane catalyst | g | 0.12 | 0.12 | 0.12 |
| adduct: | | | | |
| - Desmodur L 2291 A + CLM* | g | 2.4 | - | - |
| - P 380/Desmodur W + CLM | g | - | 11.6 | - |
| - acyllactam | g | - | - | 3.2 |
| polyisocyanate: | | | | |
| - Isonate 143 L | g | 1.52 | - | 1.14 |
| - P 2010**/Isonate 143L prepolymer (NCO/OH=2/1) | g | - | 13.5 | - |
| P 2010 polyol | g | 10 | 10 | 7.6 |
| mixing temperature | °C | 95 | 95 | 95 |
| polymerization temperature | °C | 140 | 140 | 140 |
| solidification time | min. | 43 | 70 | 60 |

* CLM is caprolactam

** P 2010 is a polyoxypropylene with a MW of appr. 2000.

Examples 7-9

With different compounds, namely potassiumlactamate (KL), sodium lactamate (NaL) and lactammagnesiumbromide (LMB), the catalytic effect on polyisocyanate trimerization was determined. Therefore a polyisocyanate was heated in a test tube at 95°C and in another test tube the catalyst was heated at the same temperature. Thereafter the catalyst was poured to the isocyanate and after mixing the test tube was immersed in an oil bath at 140°C.

The solidification times observed are shown in table IV. I.R. measurements of the samples showed the isocyanurate groups formed.

Table IV

| Ex. no. | | 7 | 8 | 9 |
|---|---|---|---|---|
| polyisocyanurate | | | | |
| - P 2010/Isonate 143 L prepolymer (1/2) | g | 25 | 25 | - |
| - Isonate 143 L | g | - | - | 25 |
| Catalyst* | | KL | NaL | LMB |
| - concentration | eq/kg | 2.0 | 1.3 | 1.0 |
| weight | g | 4.0 | 7.2 | 6.0 |
| mixing temperature | °C | 95 | 95 | 95 |
| polymerization temperature | °C | 140 | 140 | 140 |
| solidification time | | 30" | 13'45" | 4'30" |

* catalysts are solutions in caprolactam

Example 10 (polyamide and polyisocyanurate alloy)

In the same way as described for examples 1-3, two solutions, 'A' and 'B', in caprolactam were prepared respectively having the compositions presented in TABLE A.

TABLE A

A 8.3 g activator[x], [xx]
3 g Pluracol TPE 4542 (polyether triol, eq. wt. 1567)
16 g caprolactam

B 21.1 g potassium lactamate [xx]
16 g caprolactam
2 drops of T-12 (dibutyltin dilaurate)

Both solutions were mixed together with 0.3 g Isonate 143 L at 90 °C. The resulting mixture was introduced into a mold at 130 °C. The mixture became viscous after 5 sec, reached its cloud point after 80 sec and was completely copolymerized after 6 minutes, 15 seconds.

Example 11 (polyamide and polyisocyanurate alloy)

Using the process described in Example 9 with the exception that 0.16 g of hexamethylene diisocyanate (HDI) was used instead of Isonate 143 L, the mixture became viscous after 5 seconds, reached its cloud point after 55 seconds and was completely polymerized after 120 seconds.

The comparison of Examples 10 and 11 clearly shows that the use of HDI as the polyisocyanate in the polyurethane forming compounds is to be preferred.

Example D

To a test-tube containing 3 g. of Pluracol TPE 4542, 32 g of caprolactam and two drops of $T_{12}$ at a temperature of 90 °C, 0.16 g HDI was added. After immersing the test tube in an oil bath of 130 °C for 5 minutes, the reaction mixture was still clear (no cloud point).

---

(x prepared by reacting a polypropylene-oxide triol and hexamethylene carbamoyl biscaprolactam in using sodium lactamate as catalyst.

xx contains caprolactam; amounts thereof in the aggreate mixture was 34.7 grams. )

Thereafter 2.1 g of potassium lactamate in caprolactam was added. No polymerization was observed within 15 minutes.

This confirms that the HDI does not react with the caprolactam to give a caprolactam blocked HDI activator, at least not under this reaction conditions.

Example 12 (polyamide and polyisocyanurate alloy)

In 87 gr. anhydrous caprolactam 26 gr. potassiumlactamate (2 molair in caprolactam) was dissolved at 95°C to form component A.

Separately 7.67 gr. of an adduct from Desmodur L 2291 A (Bayer) and a stoichiometric amount of caprolacam together with 41.9 gr. of an isocyanate terminated prepolymer from one equivalent P 2010 (polyoxypropylene glycol with a molecular weight of approximately 2000) and two equivalents Isomate 143 L (Upjohn) were heated till 95°C to form component B.

The adduct is the activator for the polyamide and the isocyanate terminated prepolymer is the polyisocyanate forming compound. After mixing components A and B the mixture was poured into a mold at 140°C. After 15 minutes the sample was demolded. The physical properties of the polyamide-polyisocyanurate alloy formed are shown in table V.

Examples 13-20 (polyamide and polyisocyanurate alloys)

In the same manner as example 12, various mixtures were prepared, using different amounts of components.

In the table V the compositions, conditions and properties of the products obtained are given.

Acyl lactam is obtained by reacting one equivalent of polyoxypropylene glycol (with a molecular weight of approximately 4000) with two equivalents of terephtaloyldichloride and thereafter blocked with a stoichiometric amount of caprolactam.

**TABLE V**

| Ex. no. | | 12 | 13 | 14 | 15 | 16 | 17 | 18 | 19 | 20 |
|---|---|---|---|---|---|---|---|---|---|---|
| Polyether | wt.% | 20 | 20 | 27 | 30 | 20 | 23.7 | 25 | 20 | 20 |
| Caprolactam | g | 87 | 93.5 | 87 | 87 | 100 | 100 | 87 | 100 | 64.4 |
| catalyst | eq/kg | 2 | 2 | 2 | 2 | 2 | 2 | 2 | 1 | 1 |
| - potassiumlactamate | g | 26 | 19.5 | 26 | 26 | 13 | 13 | 26 | - | - |
| - lactam MgBr | g | - | - | - | - | - | - | - | 29.4 | 52 |
| Adduct: | | | | | | | | | | |
| - Desmodur L 2291 A + CLM* | g | 7.67 | 7.67 | 7.67 | 7.67 | - | - | 7.7 | - | 7.67 |
| - Acyl lactam | g | - | - | - | - | - | - | - | 16.2 | - |
| - P 380/HDI/CLM* | g | - | - | - | - | 7.0 | 28.0 | - | - | - |
| Prepolymer | | | | | | | | | | |
| - P 2010/Isonate 143 L | g | 41.9 | 41.9 | 64.4 | 76.1 | 31.7 | 19.2 | - | 26.8 | 43.1 |
| - Teracol 2000/ Isonate 143 L | g | - | - | - | - | - | - | 56.9 | - | - |
| Total caprolactam | g | 114 | 114 | 114 | 114 | 110 | 111 | 114 | 127 | 114 |
| Eq ratio Cat/caprolactam | % | 5.6 | 4.1 | 5.6 | 5.6 | 2.7 | 2.7 | 5.6 | 2.7 | 5.6 |
| Eq ration Adduct/ caprolactam | % | 2.8 | 2.8 | 2.8 | 2.8 | 0.53 | 2.1 | 2.8 | 0.34 | 2.8 |
| Mixing temperature | °C | 95 | 95 | 95 | 95 | 95 | 95 | 95 | 95 | 95 |
| Molding temperature | °C | 140 | 140 | 140 | 140 | 160 | 140 | 140 | 140 | 140 |
| Molding time | min. | 15 | 15 | 15 | 15 | 15 | 15 | 15 | 40 | 60 |
| Solidification time | min. | 2'15" | 3'20" | 3'20" | 4'00" | 2'00" | 3'00" | 2'30" | 27'30" | 34'05" |
| Flexural modulus | MPa | 1212 | 1340 | 870 | 615 | 631 | 981 | 1329 | 583 | 995 |
| Notched Izod Impact | J/m | 128 | 205 | 325 | 437 | 216 | 200 | 187 | 410 | 411 |

*CLM= caprolactam

Example 21 (Polyamide and polyisocyanurate alloy)

In 87 gr. anhydrous caprolactam 26 gr. potassiumlactamate (2 molar in caprolactam), 32.5 gr. P 2010 (polyoxypropylene glycol with a molecular weight of approximately 2000), 0.046 gr. T-9 catalyst (methane catalyst) and 0.046 gr. Dabco TMR (trimerization catalyst) were dissolved at 95°C to form component A.

7.67 gr. of an adduct from Desmodur L 2291 A (Bayer) and a stoichoimetric amount of caprolactam together with 9.39 gr. Isonate 143 L (Upjohn) were heated till 95°C to form component B.

After mixing components A and B the mixture was poured into a mold at 140°C. After 15 minutes the sample was demolded. The physical properties of the alloy formed are shown in table VI.

Example 22 (polyamide and polyisocyanurate alloy)

In the same way as described in example 20 a sample was made with an acyllactam (reaction product of one equivalent polyoxypropylene glycol, MW 4000, and two equivalents terephtaloylchloride, thereafter blocked with a stoichiometric amount of caprolactam) in stead of Desmodur L 2291 A adduct and lactam magnesiumbromide (1 molar in caprolactam) in stead of potassiumlactamate. The physical properties of the alloy formed are shown in table VI.

TABLE VI

| Ex. no. | | 21 | 22 |
|---|---|---|---|
| polyether | wt.% | 20 | 20 |
| P 2010 | g | 32.5 | 20.8 |
| caprolactam | g | 87 | 100 |
| catalyst: | | | |
| - potassiumlactamate | g | 26 | - |
| - lactam MgBr | g | - | 29.4 |
| - T-9 | g | 0.046 | 0.023 |
| - Dabco TMR | g | 0.046 | 0.023 |
| Adduct: | | | |
| - Desmodur L 2291 A + CLM* | g | 7.67 | - |
| - Acyllactam | g | - | 16.2 |
| Isonate 143 L | g | 9.39 | 6.0 |
| Total caprolactam | g | 114 | 127 |
| eq ratio NCO/OH | | 2.0 | 2.0 |
| eq ratio Cat/CLM | % | 5.6 | 2.7 |
| eq ratio adduct/CLM | % | 2.8 | 0.34 |
| mixing temperature | °C | 95 | 95 |
| molding temperature | °C | 140 | 140 |
| molding time | min. | 15 | 40 |
| solidification time | | 1'05" | 29'35" |
| Flexural modulus | MPa | 1170 | 925 |
| Notched Izod impact | J/M | 88 | 125 |

* CLM= caprolactam

Example 23 (polyurea and polyamide alloy)

In 20 gr. anhydrous caprolactam 16.2 gr. lactam magnesiumbromide (1 molar in caprolactam), 0.5 gr. Niax A-1 and 10 gr. Jeffamine D-2000 (Texaco) were dissolved at 95°C to form component A.

2.4 gr. of an adduct from Desmodur L 2291 A and a stoichiometric amount of caprolactam together with 1.52 gr. Isonate 143 L were heated at 95°C to form component B.

Components A and B were mixed together in a test tube and this test tube was immersed in an oil bath at 140°C. The solidification time was 26 minutes.

Examples 24-26 (polyurea and polyamide alloy)

In the same manner as example 23, mixtures were prepared using different amounts of components.

The adducts used are:

- P 380 reacted with Desmodur W (NCO/OH=3/1) and the resulting isocyanate terminated prepolymer capped with a stoichiometric amount of caprolactam
- Acyllactam prepared by reacting one equivalent of polyoxypropylene glycol (MW 4000) with two equivalents of terephtaloyldichloride and thereafter blocked with a stoichiometric amount of caprolactam.

The compositions, conditions and solidification times are given in table VII.

TABLE VII

| Ex. no. | | 24 | 25 | 26 |
|---|---|---|---|---|
| polyether | wt.% | 32 | 17 | 39 |
| caprolactam | g | 20 | 20 | 20 |
| lactam MgBr | g | 16.2 | 16.2 | 16.2 |
| Polyamine: | | | | |
| - Jeffamine D-2000 | g | 10 | - | 10 |
| - Polacure 740 M | g | - | 1.5 | - |
| Niax A-1 | g | 0.6 | 0.6 | 0.7 |
| Adduct: | | | | |
| - P380/Desmodur W + CLM* | g | 11.6 | 11.6 | - |
| - Acyllactam | g | - | - | 18.0 |
| Polyisocyanate: | | | | |
| - Isonate 143 L | g | 1.52 | - | 1.52 |
| - P 2010**/Isonate 143 L prepolymer (NCO/OH=2/1) | g | - | 13.5 | - |
| mixing temperature | °C | 95 | 95 | 95 |
| polymerization temperature | °C | 140 | 140 | 140 |
| solidification time | | 24'25" | 59' | 9'20" |

* CLM= caprolactam

** P 2010 is a polyoxypropylene glycol MW approximately 2000

CLAIMS

1. Process for preparing a polymer alloy, preferably by reaction injection molding, comprising:
introducing a mixture of substantially stable reactant streams into a mold, said mixture containing
1) polymer forming compounds forming at least one polymer of the group consisting of polyurethane polymer, polyurea polymer and polyisocyanurate polymer, and
2) polyamide polymer forming compounds,
said polyurethane polymer forming compounds including a polyol, a polyisocyanate, and a urethane polymerization catalyst,
said polyurea polymer forming compounds including a polyamine or hydrazine containing compound, a polyisocyanate and optionally a urea pclymerization catalyst,
said polyisocyanurate polymer forming compounds comprising an isocyanate groups containing prepolymer or a polyol and a polyisocyanate, and a trimerization catalyst,
said polyamide polymer forming compounds including lactam, an anionic polymerization catalyst and a polymerization activator,
said polyurethane polymer forming compounds, said polyisocyanurate polymer forming compounds, said polyurea polymer forming compounds and said polyamide polymer forming compounds reacting to form polyurethane, polyurea, polyisocyanurate and polyamide polymers respectively in said mold thereby yielding a polymer alloy composed of said polymers, and recovering said polymer alloy from said mold.

2. Process according to claim 1, wherein said mixture comprises polyurethane polymer forming compounds and polyamide polymer forming compounds, polyisocyanurate polymer forming compounds and polyamide polymer forming compounds, polyurea polymer forming compounds and polyamide polymer forming compounds, polyurethane polymer forming compounds and polyisocyanurate forming compounds and polyamide forming compounds, polyurethane polymer forming compounds and polyurea polymer forming compounds and polyamide polymer forming compounds, polyurea polymer forming compounds and polyisocyanurate polymer forming compounds and polyamide polymer

forming compounds, or polyurea polymer forming compounds and polyurethane polymer forming compounds and polyisocyanurate polymer forming compounds and polyamide polymer forming compounds.

3. Process according to claim 1, wherein said polyisocyanurate polymer forming compounds comprise at least one polyisocyanate, at least one polyol, and at least one trimerization catalyst wherein the molar ratio of the NCO-groups in the polyisocyanate and the OH-groups in the polyol is between 1 and 10, preferably between 2 and 6.

4. Process according to claim 1, wherein the trimerization catalyst is chosen from the group consisting of alkali metal lactamates, alkali metal carboxylates, hexahydrotriazine derivatives, zwitterion compounds, tertiary alkanolamine compounds, tertiary amines in combination with epoxy compounds, tertiary amines in combination with alkali metal carboxylates, quaternary ammonium carboxylates and combinations thereof.

5. Process according to claim 4, wherein said catalyst comprises an alkali metal lactamate.

6. Process according to claim 1, wherein said isocyanate-terminated prepolymer comprises the reaction product of a polymer containing active hydrogen groups reactive with an isocyanate group and a polyisocyanate.

7. Process according to claim 1, wherein said anionic lactam polymerization catalyst is at least one alkali metal compound, at least one Grignard compound, or a mixture of two or more of these catalysts.

8. Process according to claim 1, wherein said lactam polymerization activator comprises a lactam blocked isocyanate, or an acyl lactam compound.

9. Process according to claim 8, wherein said activator is the reaction product of a high molecular weight polyol and a compound providing the activator group.

10. Process according to claim 1, wherein the said polyurethane polymer forming compounds comprise at least one polyol chosen from the group consisting of polyether polyol, polyester polyol, polybutadiene polyol, grafted polyether polyol, polyurea-dispersion in polyetherpolyol, polyesterpolyol, and mixtures of two or more thereof.

11. Process according to claim 1, wherein said polyurethane polymer forming compounds comprise at least one polyisocyanate chosen from the group consisting of aromatic, aliphatic, araliphatic and/or cycloaliphatic polyisocyanates and mixtures thereof.

12. Process according to claim 1, wherein said polyurethane catalyst is a tertiary amine and/or a tin salt of carboxylic acids.

13. Process according to claim 1, wherein the polyurethane polymer forming compounds additionally comprise a chain extender chosen from the group consisting of aliphatic unbranched or branched diols and triols, low molecular weight polyethylene glycols and cycloaliphatic diols and mixtures thereof.

14. Process according to claim 1, wherein said polyamine is chosen from the group of 1-methyl-3,5-diethyl-2,4 diaminobenzene, 1-methyl-3,5 diethyl-2,6 diaminobenzene (both of these materials are also called diethyltoluene diamine or detda), 1,3,5-triethyl-2,6 diaminobenzene, 3,5,3',5'-tetraethyl-4,4'' diaminodiphenylmethane, 2,4- and 2,6-diaminotoluene, 2,4'- and/or 4,4'-diaminodiphenylmethane, 1,3- and 1,4-phenylenediamine, naphthylene-1,5-diamine and triphenylmethane-4,4',4''-triamine

15. Process according to claim 1, wherein said polyurea polymer forming compounds comprise at least one polyisocyanate chosen from the group of aromatic diisocyanates such as MDI, carbodiimide-modified MDI and toluene diisocyanate.

16. Process according to claim 1, wherein the mold temperature is between about 100 °C and about 250 °C.

17. Process according to claim 1, wherein the residence time of said mixture in said mold is between 10 seconds and 60 minutes preferably between 10 seconds and 10 minutes.

18. Molded product, prepared by a process comprising introducing a mixture of substantially stable reactant streams into a mold, said mixture containing

1) polymer forming compounds forming at least one polymer of the group consisting of polyurethane polymer, polyurea polymer and polyisocyanurate polymer and

2) polyamide polymer forming compounds,
said polyurethane polymer forming compounds including a polyol, a polyisocyanate, and a polyurethane polymerization catalyst, said polyurea polymer forming compounds including a polyamine or hydrazine containing compound, a polyisocyanate and optionally a urea polymerization catalyst, said polyisocyanurate polymer forming compounds comprising an isocyanate groups containing prepolymer, or a polyol and a polyisocyanate, and a trimerization catalyst, said polyamide polymer forming compounds including lactam, an anionic polymerization catalyst and a polymerization activator, said polyurethane polymer forming compounds, said polyurea polymer forming copounds, said polyisocyanurate polymer forming compounds and said polyamide polymer forming compounds reacting to form polyurethane, polyurea, polyisocyanurate and polyamide polymers respectively in said mold, thereby yielding a molded product composed of said polymers, and recovering said product from said mold.

19. A reaction injection molded product composed of,
1) a polyurethane and/or a polyisocyanurate and/or crosslinked polyurea polymer, and
2) a polyamide polymer.

20. A product according to claim 18 or 19, wherein said product is an interpenetrating polymer network of said polyamide polymer and said polyurethane polymer and/or said polyisocyanurate polymer and/or said polyurea polymer, in which the polymers are crosslinked independently.

21. A product according to claim 18 or 19, wherein only one of said polyamide polymer or said polyurethane polymer is substantially linear or branched.

22. A product according to claim 18-20, wherein both said polyamide and said polyurethane polymer are substantially linear or branched.

23. A product according to claim 18, substantially as described and elucidated in the examples.

European Patent Office

# EUROPEAN SEARCH REPORT

0158394

Application number

EP 85 20 0439

## DOCUMENTS CONSIDERED TO BE RELEVANT

| Category | Citation of document with indication where appropriate, of relevant passages | Relevant to claim | CLASSIFICATION OF THE APPLICATION (Int Cl 4) |
|---|---|---|---|
| X | FR-A- 905 823 (I.G. FARBEN) * Abstract, point 1; page 1, lines 10-25; page 1, line 37 - page 2, line 7; page 2, lines 41-66, 80-90; example 1 * | 1,2 | C 08 L 75/00<br>C 08 L 77/02<br>C 08 L 79/04<br>C 08 G 69/16<br>C 08 G 18/00 //<br>(C 08 L 75/00<br>C 08 L 77:02 )<br>(C 08 L 77/02<br>C 08 L 75:00 )<br>(C 08 L 79/04<br>C 08 L 77:02 ) |
| | --- | | |
| A | FR-A-2 110 159 (THE QUAKER OATS CO.) | | |
| | ----- | | |

| TECHNICAL FIELDS SEARCHED (Int. Cl.4) |
|---|
| C 08 L<br>C 08 G |

The present search report has been drawn up for all claims

| Place of search | Date of completion of the search | Examiner |
|---|---|---|
| THE HAGUE | 26-07-1985 | VAN PUYMBROECK M.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82